# EUROPEAN PATENT APPLICATION

(11) **EP 4 068 470 A1**
(43) Date of publication of application: **05.10.2022**
(21) Application number: 21165702.8
(22) Date of filing: 29.03.2021
(51) Int. Cl.: H01M 10/655, H01M 10/656, H01M 50/204, H01M 10/6568

(54) **HEAT TRANSFER SYSTEM WITH HEAT TRANSFER FLUID INCLUDING LIQUID AND GAS COMPONENTS**

(71) Applicant: CASTROL LIMITED, Swindon Wiltshire SN3 1RE (GB)
(72) Inventor: KITTOE, Peter, Swindon, Wiltshire, SN3 1RE (GB); FILIP, Sorin Vasile, Swindon, Wiltshire, SN3 1RE (GB)
(74) Representative: Vienne, Aymeric Charles Emile

(57) **Abstract**

A heat transfer system includes an electrochemical cell unit, a fluid circulation system, and a pump. The fluid circulation system includes a heat exchange section that is in thermal contact with the electrochemical cell unit. A cooling medium is disposed in the fluid circulation system, and, at least within the heat exchange section of the fluid circulation system, the cooling medium includes a mixture having a liquid component and a gas component.

## Description

### BACKGROUND

Various electrochemical cells, such as batteries, are used to provide power to electrical devices when needed. Similar to other electrochemical cells, as current is delivered to or drawn from the batteries, most batteries will generate heat. If the heat that is generated is not dissipated the battery will rise in temperature. Batteries typically have an effective operating temperature range, and if the battery exceeds the maximum operating temperature, the battery can become ineffective or even fail. In some cases, after a slight rise in temperature, a battery may be able to dissipate heat to its surroundings through a simple heat sink or without any thermal management. In other cases, a more specific heat transfer system is needed to dissipate heat that is generated by the battery.

Many heat transfer systems circulate a fluid to cool components that generate heat. These systems can be both complex and heavy. Accordingly, it can be particularly important that the thermal management of heat-generating components is carried out using efficient heat transfer systems.

### OVERVIEW

Aspects of the invention are recited in the independent claims and preferred features are recited in the dependent claims.

These as well as other aspects, advantages, and alternatives, will become apparent to those of ordinary skill in the art by reading the following detailed description.

### BRIEF DESCRIPTION OF THE DRAWINGS

The accompanying drawings are included to provide a further understanding of the systems and methods of the disclosure, and are incorporated in and constitute a part of this specification. The drawings are not necessarily to scale, and sizes of various elements may be distorted for clarity. The drawings illustrate one or more embodiment(s) of the disclosure, and together with the description serve to explain the principles and operation of the disclosure.
FIG. 1 is a schematic plan view of a heat transfer system according to an embodiment of the disclosure;
FIG. 2 is a schematic plan view of an electrochemical cell unit according to an embodiment of the disclosure;
FIG. 3 is a schematic plan view of an electrochemical cell unit according to another embodiment of the disclosure;
FIG. 4 is a schematic plan view of a heat transfer system according to another embodiment of the disclosure;
FIG. 5 is a schematic plan view of a heat transfer system according to another embodiment of the disclosure;
FIG. 6 is a schematic plan view of a heat transfer system according to yet another embodiment of the disclosure;
FIG. 7 is a schematic plan view of a heat transfer system according to still another embodiment of the disclosure; and
FIG. 8 is a flow chart of a method according to an embodiment of the disclosure.

### DETAILED DESCRIPTION

Disclosed herein are systems and methods for the thermal management of electrochemical cells. Beneficially, the systems and methods utilize a cooling medium that includes a liquid component and a gas component.

Thus, in a first aspect, the present disclosure provides a heat transfer system comprising:
an electrochemical cell unit comprising an electrochemical cell;
a fluid circulation system comprising a heat exchange section in thermal contact with the electrochemical cell unit;
a cooling medium disposed in the fluid circulation system, wherein, within the heat exchange section of the fluid circulation system, the cooling medium comprises a mixture including a liquid component and a gas component; and
a pump configured to circulate the cooling medium through the fluid circulation system.

In some embodiments of the heat transfer system, within the heat exchange section of the fluid circulation system, the gas component forms at least 50% by volume of the cooling medium.

In some embodiments of the heat transfer system, within the heat exchange section of the fluid circulation system, at least a portion of the liquid component and gas component of the cooling medium form a foam.

In some embodiments of the heat transfer system the heat exchange section of the fluid circulation system includes fluid paths that extend through the electrochemical cell unit such that the cooling medium is in direct contact with the electrochemical cell.

In some embodiments of the heat transfer system the liquid component of the cooling medium includes at least one of a surfactant and a foam suppressant.

In some embodiments of the heat transfer system the fluid circulation system comprises:
a primary circuit including the heat exchange section, wherein the liquid component of the cooling medium is confined to the primary circuit,
a gas inlet in the primary circuit that is upstream of the heat exchange section; and
a gas outlet in the primary circuit that is downstream of the heat exchange section.

In some embodiments of the heat transfer system the gas inlet is one of a plurality of gas inlets disposed upstream of the heat exchange section.

In some embodiments of the heat transfer system the gas inlet is disposed under the electrochemical cell unit and the gas outlet is disposed above the electrochemical cell unit such that buoyancy of the gas component causes the gas component to rise through the electrochemical cell unit.

In some embodiments of the heat transfer system the fluid circulation system further comprises a secondary circuit extending from the gas outlet to the gas inlet so as to recirculate the gas component about the fluid circulation system.

In some embodiments of the heat transfer system the cooling medium includes the liquid component and the gas component throughout the fluid circulation system.

In some embodiments of the heat transfer system the pump is configured to circulate the liquid component and gas component of the cooling medium as a mixture about the fluid circulation system.

In some embodiments of the heat transfer system the further comprising a mixer configured to promote bubble formation within the cooling medium.

In another aspect, the disclosure provides a method of cooling an electrochemical cell unit, the method comprising:
providing a heat exchange section of a fluid circulation system in thermal contact with an electrochemical cell unit that includes an electrochemical cell; and
circulating a cooling medium through the fluid circulation system so as to transfer energy from the electrochemical cell unit to the cooling medium, wherein, within the heat transfer section of the fluid circulation system, the cooling medium includes a liquid component and a gas component.

In some embodiments of the method, circulating the cooling medium maintains, within the heat exchange section of the fluid circulation system, the gas component of the cooling medium in a ratio of at least 50 % by volume.

In some embodiments of the method, circulating the cooling medium includes maintaining the cooling medium in the form of a foam throughout the fluid circulation system.

In some embodiments of the method, circulating the cooling medium includes circulating conveying the foam through a pump.

In some embodiments of the method, the fluid circulation system comprises a primary circuit including the heat exchange section,
wherein the liquid component of the cooling medium is confined to the primary circuit, and
wherein circulating the cooling medium includes injecting the gas component into the primary circuit.

In some embodiments of the method, injecting the gas component into the primary circuit drives the liquid component through the fluid circulation system.

In some embodiments of the method, the gas component is injected into the primary circuit at a location that is beneath the electrochemical cell unit such that buoyancy of the gas component causes the gas component to rise through the electrochemical cell unit.

In some embodiments the method further includes collecting the gas component through an outlet of the primary circuit.

Example systems and methods are described herein. It should be understood that the words "example" and "exemplary" are used herein to mean "serving as an example, instance, or illustration." Any embodiment or feature described herein as being an "example" or "exemplary" is not necessarily to be construed as preferred or advantageous over other embodiments or features. In the following detailed description, reference is made to the accompanying figures, which form a part thereof. In the figures, similar symbols typically identify similar components, unless context dictates otherwise. Other embodiments may be utilized, and other changes may be made, without departing from the scope of the subject matter presented herein.

The example embodiments described herein are not meant to be limiting. It will be readily understood that the aspects of the present disclosure, as generally described herein, and illustrated in the figures, can be arranged, substituted, combined, separated, and designed in a wide variety of different configurations, all of which are explicitly contemplated herein.

As used herein, with respect to measurements, "about" means +/- 5 %.

Unless otherwise indicated, the terms "first," "second," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

Reference herein to "one embodiment" or "one example" means that one or more feature, structure, or characteristic described in connection with the example is included in at least one implementation. The phrases "one embodiment" or "one example" in various places in the specification may or may not be referring to the same example.

As used herein, a system, apparatus, device, structure, article, element, component, or hardware "configured to" perform a specified function is indeed capable of performing the specified function without any alteration, rather than merely having potential to perform the specified function after further modification. In other words, the system, apparatus, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware which enable the system, apparatus, structure, article, element, component, or hardware to perform the specified function without further modification. For purposes of this disclosure, a system, apparatus, structure, article, element, component, or hardware described as being "configured to" perform a particular function may additionally or alternatively be described as being "adapted to" and/or as being "operative to" perform that function.

In the following description, numerous specific details are set forth to provide a thorough understanding of the disclosed concepts, which may be practiced without some or all of these particulars. In other instances, details of known devices and/or processes have been omitted to avoid unnecessarily obscuring the disclosure. While some concepts will be described in conjunction with specific examples, it will be understood that these examples are not intended to be limiting.

The systems and methods described herein are adapted for heat transfer systems that use a cooling medium which includes a liquid component and a gas component. The cooling medium is circulated through a fluid circulation system that includes a heat exchange section in thermal contact with a heat-generating electrical component. Accordingly, the cooling medium absorbs energy from the electrical component to maintain the electrical component within a desired temperature range.

In some embodiments, the electrical component of the heat transfer system is an electrochemical cell unit including one or more electrochemical cells. For instance, in some embodiments, the electrical component is a battery pack that includes a plurality of batteries. In other embodiments, the electrical component is another type of electrochemical cell, such as a fuel cell. Still, in other embodiments the heat transfer system includes another type of electrical component, such as a motor or a computer.

In some embodiments, the heat transfer system is part of a vehicle. For example, in some embodiments, the heat transfer system is associated with electrochemical cells and/or motors in a car, truck, locomotive, boat, or plane. In other embodiments, the heat transfer system is part of a stationary system such as a power storage or power generation system. Still, in other embodiments, the heat transfer system is part of another system that includes a heat-generating electrical component.

The use of a cooling medium that includes both a liquid component and a gas component can provide several advantages. For example, the inclusion of the gas component as part of the cooling medium reduces of the weight of the cooling medium that is circulated through the fluid circulation system. As a result, the entire heat transfer system may have a reduced weight compared to conventional heat transfer systems. This weight reduction may be advantageous in various types of systems. For instance, vehicles that use large electrical components, such as batteries or motors, may obtain a performance advantage by having a reduced weight of the heat transfer system. The reduced weight of the cooling medium and heat transfer system can either be beneficial by reducing the overall weight of the vehicle, thereby improving maneuverability or efficiency. Alternatively, the reduction of weight of the cooling medium and heat transfer system can allow the vehicle to add additional beneficial components while maintaining the overall weight of the vehicle. For example, with the reduction in weight of the cooling medium, additional battery cells may be added while maintaining the weight of a battery pack.

In addition to vehicles, there are other instances where weight reduction may be advantageous. For example, the position of the heat transfer system can cause the weight reduction to be beneficial. For instance, in elevated positions, such as wind turbines or electrical systems at the top of buildings, the reduction in weight is advantageous for the structural integrity of the supporting construction.

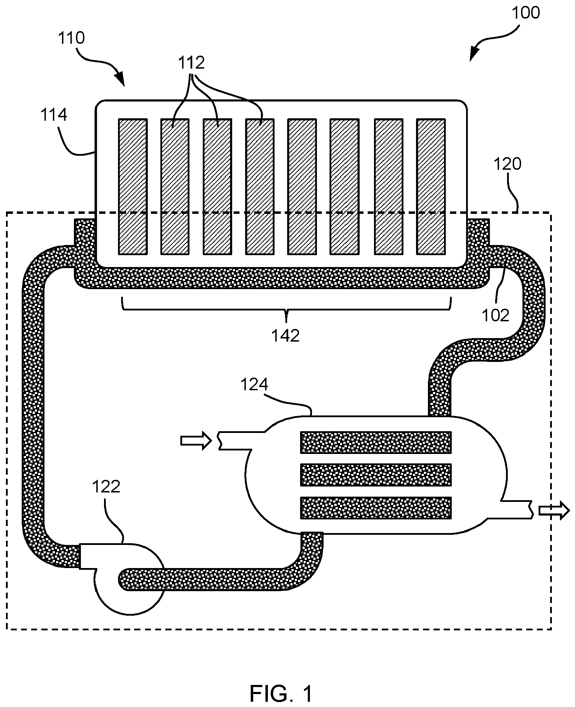

With reference to the Figures, FIG. 1 shows a heat transfer system 100 that includes an electrochemical cell unit 110 comprising an electrochemical cell 112. The heat transfer system 100 also includes a fluid circulation system 120 including one or more fluid paths for circulating a cooling medium 102 that is disposed within the fluid circulation system 120 and dispersed throughout the fluid paths. The fluid circulation system 120 includes a heat exchange section 142 that is in thermal contact with the electrochemical cell unit 110 such that heat generated within the electrochemical cell unit 110 may be transferred to the cooling medium 102 within the fluid circulation system 120. Within the heat exchange section 142 of the fluid circulation system 120, the cooling medium 102 comprises two phases, including a liquid component and a gas component.

During operation of the electrochemical cell unit 110, as current is either delivered to or drawn from the electrochemical cell 112, some energy may be converted to heat within the electrochemical cell 112 or neighboring electrochemical cells 112. As a result, the electrochemical cell 112 may rise in temperature. A temperature difference between the electrochemical cell 112 and the cooling medium 102 within the heat exchange section 142 may cause energy to be dissipated from the electrochemical cell 112 to the cooling medium 102. Likewise, the cooling medium 102 adjacent to other electrochemical cells 112 of the electrochemical cell unit 110 may similarly absorb heat from the other respective electrochemical cells 112.

The heat transfer system 100 may also include a pump 122 configured to circulate the cooling medium 102 through the fluid circulation system 120. In some embodiments, as in the embodiment shown in FIG. 1, the fluid circulation system 120 may be in the form of a loop with the pump 122 arranged in the loop to circulate all of the cooling medium 102 around the loop of the fluid circulation system 120. In other embodiments, the pump 122 may have a different configuration, and operate to circulate the cooling medium 102 in another manner, as described in various embodiments below.

The term pump, as used herein, includes any device that uses energy to move a fluid. For example, the pump can be formed by any actuator or mechanism that moves fluid, such as rotary, piston or other pumps. Still, in other embodiments, the heat transfer system 100 may be configured without a pump. For example, in some embodiments, the cooling medium 102 may circulate through the fluid circulation system 120 as a result of variations in temperature and convection, for example by thermo-syphoning.

In some embodiments, the heat transfer system 100 may also include a heat exchanger 124 within the fluid circulation system 120. The heat exchanger 124 may be configured to remove energy from the cooling medium 102 that was absorbed from the electrochemical cell unit 110 within the heat exchange section 142 of the fluid circulation system 120. To promote cooling of the cooling medium 102 within the heat exchanger 124, another fluid may run through the heat exchanger 124 to absorb heat from the cooling medium 102. The heat exchanger may be constructed as a parallel flow, counter flow, or cross flow heat exchanger. As an example, in some embodiments, the heat exchanger may be a radiator and the second fluid that is used to cool the cooling medium 102 may be air. In other embodiments, the second fluid may be a liquid coolant that is cooled in yet another heat exchanger. In some embodiments, the heat exchanger 124 may include interposed passages that hold the cooling medium 102 and the second fluid. In other embodiments, the heat exchanger may have a simpler construction, such as a first plate with a passage that holds the cooling medium 102 and a second plate with a passage that holds the second fluid. Other configurations are also possible.

Still, in other embodiments the heat transfer system 100 may include other structures to absorb energy from the cooling medium 102, in addition to or instead of a heat exchanger. For example, in some embodiments, a heat sink may be used to reduce the temperature of the cooling medium 102.

In some embodiments, the electrochemical cell unit may include a plurality of electrochemical cells. For example, in the embodiment shown in FIG. 1, the electrochemical cell unit 110 includes a number of electrochemical cells 112 that are electrically connected and disposed in a single housing 114 that forms the electrochemical cell unit 110. As an example, in some embodiments, the electrochemical cell unit 110 may be a battery pack that includes a plurality of battery cells that are disposed within a battery pack housing. In other embodiments, the electrochemical cell unit 110 may include a single electrochemical cell, such as a single battery or other type of cell.

In various embodiments of the heat transfer system 100, the ratio of the gas component and the liquid component of the cooling medium 102 may vary over a range of values. Furthermore, as explained in more detail below, the ratio of the gas component to the liquid component may vary within the fluid circulation system 100. For example, in some embodiments, in certain areas of the fluid circulation system 120, the gas component may form a higher percentage of the cooling medium 102 than in other areas of the fluid circulation system 120.

In some embodiments, within the heat exchange section 142 of the fluid circulation system 120, the gas component may form at least 50% by volume of the cooling medium 102. Further in some embodiments the gas component may form at least 75% by volume of the cooling medium 102, or at least 80% of the cooling medium, or at least 90% of the cooling medium. Moreover, the weight of the gas component of the cooling medium is not substantial. Accordingly, the replacement of a liquid with the gas component of the cooling medium results in a substantially direct reduction in weight of the system. Thus, a system where 80% of the cooling medium is gas may have a reduction in weight of about 80% compared to a system where the cooling medium is entirely liquid. Of course, in other embodiments, the gas component may form a smaller percentage of the cooling medium within the heat exchange section 142 of the fluid circulation system 120.

In some embodiments, within the heat exchange section of the fluid circulation system, at least a portion of the liquid component and gas component of the cooling medium form a foam. The term foam, as used herein, includes bubbles of gas that are dispersed in a liquid. In some embodiments the foam is stable for at least 10 seconds, for example at least 30 seconds, for example at least 1 minute. In some embodiments, the foam moves collectively through the heat exchange section, such that the velocity of the gas component in the heat exchange section is substantially equal to the velocity of the liquid component in the heat exchange section. In other words, in some embodiments, the bubbles of gas and the liquid surrounding the bubbles substantially move together through the fluid circulation system. For example, in some embodiments, the velocity of the liquid component through the center of a conduit of the fluid circulation system is at least 80% of the velocity of the gas component through the center of the same conduit. In other embodiments, the bubbles of the gas component move through the liquid component, and the liquid component moves at a slower velocity.

In some embodiments, the liquid component of the cooling medium includes one or more liquid coolants. For example, the liquid component of the cooling medium may include a water-based coolant. Such a coolant may include glycol or other additives. Likewise, the liquid component of the cooling medium may alternatively be an oil-based coolant. The liquid coolants of the cooling medium may include various mixtures of components, as would be understood by those of ordinary skill in the art.

In some embodiments, the liquid component of the cooling medium includes at least one of a surfactant and a foam suppressant. For example, in some embodiments, the liquid component of the cooling medium includes concentrations of both surfactants and foam suppressants to influence various characteristics of the cooling medium, such as bubble size, viscosity, and others.

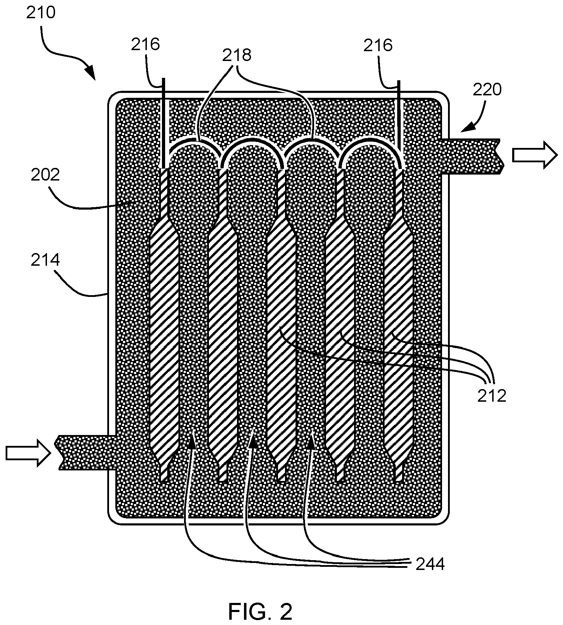

In some embodiments, the heat exchange section of the fluid circulation system includes fluid paths that extend through the electrochemical cell unit such that the cooling medium is in direct contact with the electrochemical cell. FIG. 2 shows a more detailed embodiment of an electrochemical cell unit with such a configuration. The electrochemical cell unit shown in FIG. 2 is configured as a battery pack 210 including a plurality of battery cells 212. However, units having the same configuration as shown in FIG. 2 with other types of electrochemical cells are also possible.

The battery pack 210 may include a housing 214 that holds the battery cells 212 as well as fluid conduits 244 of the fluid circulation system 220. Further, the battery pack 210 may also include electrical terminals 216 on the outside of the housing 214 for connecting the battery pack 210 to a power source or an electrical load. The battery pack 210 may further include electrical connections 218 that electrically connect the battery cells 212 within the battery pack 210. The electrical connections 216 may connect the battery cells 212 in series, in parallel, or in a combination, such as several battery cells 212 being connected in series to form a group, and the groups of battery cells connected in parallel.

The electrical connections may include any conductive structure to transfer current from one battery cell to another. For example, the electrical connections may include tabs that act as a terminal for each of the battery cells, which are connected to one another by wires or conductive bars. Other electrical connections are also possible.

In some embodiments the electrical connections 218 may be contained within the fluid circulation system 220. For example, as shown in FIG. 2, the electrical connections 218 between the battery cells 212 in the battery pack 210 may be positioned within the fluid circulation system 220, such that the cooling medium 202 surrounds the electrical connections 218. Such a configuration allows any heat generated by the flow of current through the electrical connections 218 to be dissipated into the cooling medium 202.

In some embodiments, the battery cells 212 are pouch cells. For example, the casing of the battery cells 212 may be in the form of a pouch formed of a flexible material, such as a foil. Tabs that form the terminals for the battery cells 212 may be connected to the electrodes within the casing and extend out of the casing for electrical connection to other battery cells 212. Further, the tabs may be sealed where they pass through the cell casing. In other embodiments, the battery cells may be prism cells or cylindrical cells.

In some embodiments, the liquid component of the cooling medium 202 may be a dielectric. Accordingly, conductive parts of the battery cells 212, such as terminals, can be in direct fluidic communication with the cooling medium 202 without compromising the performance of the battery cells 212. The term dielectric, as used herein, includes various dielectric substances that are known in the art and can suitably be used in the systems and methods described herein. For example, embodiments of the first fluid may include aliphatics (e.g., C14-C50 alkyls, C14-C50 alkenyls, C14-C50 alkynyls, polyolefins such as poly-a-olefin), aliphatic oxygenates (e.g., ketones, ethers, esters, or amides), aromatics (e.g., dialkylbenzene such as diethylbenzene, cyclohexylbenzene, 1-alkylnaphthalene, 2-alkylnaphthalene, dibenzyltoluene, and alkylated biphenyl), aromatic oxygenates (e.g., ketones, ethers, esters, or amides), silicones (e.g., silicone oil and silicate ester), halocarbons and hydrohaloethers and any combination thereof. In some embodiments the cooling medium 202 may have a dielectric constant or relative permittivity of less than 6. Further, in some embodiments, the liquid component of the cooling medium may be a liquid dielectric having a mineral oil base. Other liquid dielectrics, including synthetic fluids, are also possible for use as the liquid component of the cooling medium.

In some embodiments, the fluid conduits 244 of the heat exchange section 242 of the fluid circulation system 220 are defined, at least in part, by the casing of the battery cells 212. For example, as shown in FIG. 2, a first fluid conduit 244 is defined by the casing of the battery cells 212 on either side of the first fluid conduit 244. Using the casing of the battery cells 212 to define part of the boundary of the first fluid conduit 244 results in fluidic contact of the cooling medium 202 with the battery cells 212, which promotes heat transfer between the battery cells 212 and the cooling medium 202 within the first fluid conduit 244. In addition to the casing of the battery cells 212, the fluid conduits 244 within the battery pack 210 may also be defined by the housing 214 of the battery pack 210, or by other components.

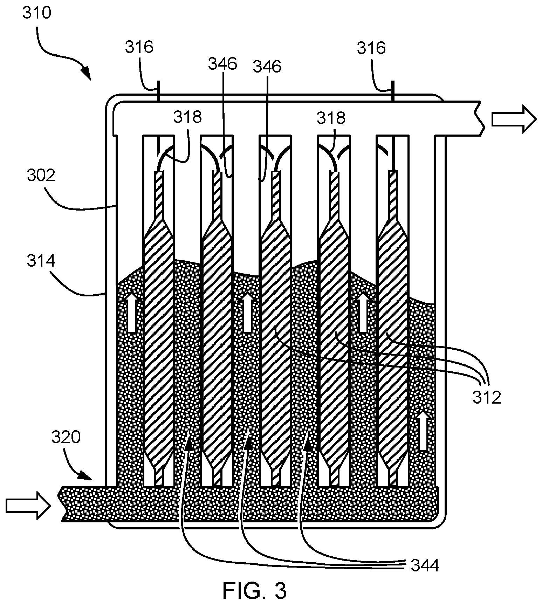

In some embodiments, the heat exchange section of the fluid circulation system includes fluid conduits extending through the electrochemical cell unit that are electrically isolated from the electrochemical cell. FIG. 3 shows a more detailed embodiment of an electrochemical cell unit with such a configuration. Like that of FIG. 2, the electrochemical cell unit shown in FIG. 3 is configured as a battery pack 310 including a plurality of battery cells 312. However, units having the same configuration as shown in FIG. 3 with other types of electrochemical cells are also possible.

The battery pack 310, shown in FIG. 3, may include a housing 314 that holds the battery cells 312 and a plurality of enclosed fluid conduits 344 of the fluid circulation system 320. For example, the fluid conduits 344 that run through the battery pack 310 may be defined by enclosed conduit walls 346, such as pipes. Accordingly, the battery cells 312 are isolated from the cooling medium 302 inside the fluid conduits 344. Likewise, the internal electrical connections 318 between the battery cells 312 and the external connections 316 of the battery pack 310 are also isolated from the cooling medium 302. The conduit walls 346 may be formed of a thermally conductive material, such as metal, so that energy from the battery cells can be readily transferred to the cooling medium 302 disposed in the fluid circulation system 320.

Still, in other embodiments, the fluid circulation system may be positioned entirely outside of the housing of the electrochemical cell unit. For example, in some embodiments, the heat exchange section of the fluid circulation system may be positioned adjacent to, but outside of, the electrochemical cell unit. Further still, in some embodiments, the housing of the electrochemical cell unit may provide passages through the middle of the unit to allow the cooling medium to flow near different areas of the electrochemical cell unit.

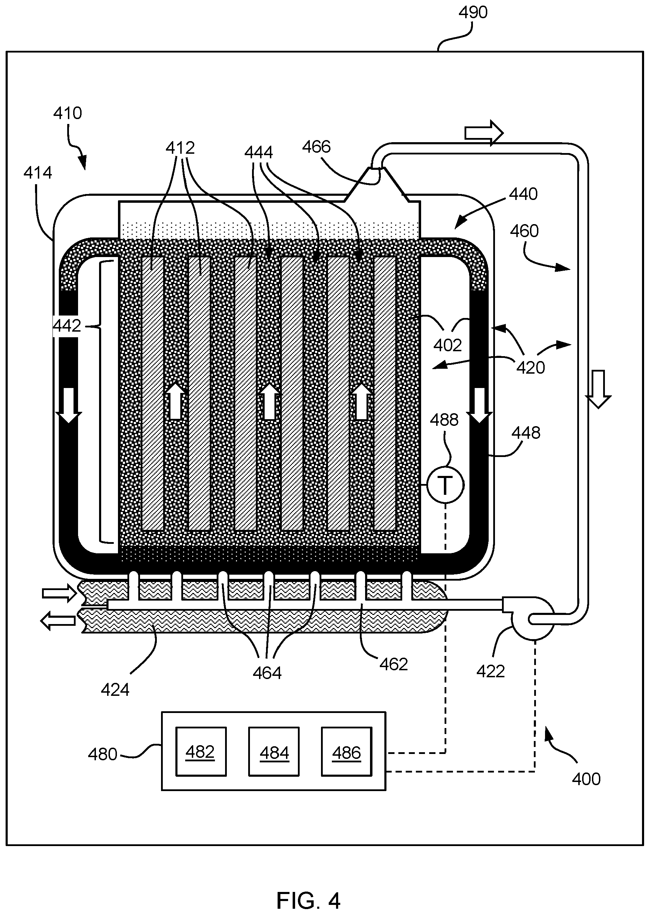

FIG. 4 illustrates another embodiment of a heat transfer system according to the disclosure. The heat transfer system 400 illustrated in FIG. 4 is part of an electric vehicle 490 and includes an electrochemical cell unit in the form of a battery pack 410. However, similar heat transfer systems may also include other types of electrochemical cell units and may be included in other types of machines or apparatuses as previously described.

The battery pack 410 shown in FIG. 4 includes a plurality of battery cells 412 held in a housing 414. The heat transfer system 400 includes a fluid circulation system 420 that contains a cooling medium 402 including both a liquid component and a gas component. In particular, the liquid component and gas component of the cooling medium 402 are mixed within a heat exchange section 442 of the fluid circulation system 420.

The fluid circulation system 420 includes passages that extend freely through the battery pack 410 such that the cooling medium 402 is in direct contact with the battery cells 412. In particular, the heat exchange section 442 of the fluid circulation system 420 is formed within the area of the battery pack 410 where the cooling medium 402 is in direct contact with the battery cells 412.

The fluid circulation system 420 of the embodiment of heat transfer system 400 shown in FIG. 4 has a primary circuit 440 that includes the heat exchange section 442 and a return path 448 that recycles the cooling medium 402. As shown in FIG. 4, the liquid component of the cooling medium 402 may be confined to the primary circuit 440. In contrast, the gas component of the cooling medium 402 may be introduced upstream of the heat exchange section 442 and then extracted from the primary circuit 440 downstream of the heat exchange section 442. Accordingly, while the cooling medium 402 may contain both the liquid component and the gas component within the heat exchange section 442, the two components can be separated in other parts of the fluid circulation system. For example, the fluid circulation system 420 of heat transfer system 400 shown in FIG. 4, may include a gas inlet 464 into the primary circuit 440 positioned upstream of the heat exchange section 442 and a gas outlet 466 from the primary circuit 440 downstream of the heat exchange section.

In some embodiments, the gas inlet is one of a plurality of gas inlets disposed upstream of the heat exchange section. For example, the primary circuit 440 may include a plurality of gas inlets 464 coupled to a gas line 462 in order to inject the gas component of the cooling medium 402 at various locations of the primary circuit 440 that are upstream of the heat exchange section 442. The use of multiple gas inlets 464 may allow the gas component to be injected into the primary circuit 440 at locations that allow the gas component to be dispersed throughout the battery pack 410. For example, one or more gas component may be located to inject bubbles of the gas component between each of the battery cells 412. Moreover, the use of multiple gas inlets 464 may also aid in dispersing the gas component within the liquid component. For example, the use of multiple gas inlets 464 can help form smaller bubbles of the gas component within the liquid component of the cooling medium 402.

In some embodiments, the fluid circulation system 420 may also include gas inlets 464 for the gas component of the cooling medium 402 that are within the heat exchange section 442 of the primary circuit 440. For example, in some embodiments, the gas component of the cooling medium 402 may be injected into the primary circuit 440 of the fluid circulation system both upstream of and within the heat exchange section 442. The use of gas inlets 464 within the heat exchange section 442 can help promote the distribution of gas throughout the heat exchange section 442. For example, in some embodiments, gas inlets 464 may be placed within the heat exchange section at locations where gas bubbles would not travel or where a gas bubble might otherwise become stagnant, such as in a corner. Alternatively, in some embodiments, the fluid circulation system 420 may include gas inlets 464 that are only located within the heat exchange section 442 of the primary circuit 440.

In some embodiments, the gas inlet may be disposed under the electrochemical cell and the gas outlet may be disposed above the electrochemical cell such that buoyancy of the gas component causes the gas component to rise through the electrochemical cell unit. For example, the gas inlets 464 of the fluid circulation system 420 of the embodiment shown in FIG. 4 are positioned beneath the battery cells 412 of battery pack 410. Accordingly, as the gas component of the cooling medium is injected into the primary circuit 440, gas bubbles will form and rise through the liquid component. For example, the gas component may be delivered into the primary circuit from the gas line 462 using a pump 422. The gas bubbles will continue to rise because of their buoyancy until they reach the surface of the liquid component. A gas outlet 466 positioned at the top of the battery pack 410 and above the surface of the liquid component of the cooling medium 402 can be used to collect the gas component that has been injected into the primary circuit 440.

Further, in some embodiments, the rising of the gas bubbles may cause the liquid component of the cooling medium 402 to also rise through the battery pack 410. The liquid component may then drain back toward bottom of the battery pack 410 through a return path 448 due to gravity. Accordingly, in some embodiments, the gas pump 422 is sufficient to circulate the gas component of the cooling medium 402 about the fluid circulation system 420. In other embodiments, the heat transfer system 400 may include both liquid and gas pumps to move the different components of the cooling medium 402 when they are separated.

In embodiments of the heat transfer system, the flow of bubbles of the gas component through the liquid component of the cooling medium, may result in turbulence and increased mixing of the cooling medium within the fluid circulation system. This increased mixing can increase the heat transfer from the electrochemical cell unit to the cooling medium, thereby raising the efficiency of the heat transfer system. This efficiency increase of the heat transfer between the electrochemical cell unit and the cooling medium can make the heat transfer system of the disclosure attractive even in situations where weight reduction is not a significant consideration.

In some embodiments, the fluid circulation system of the system may include a secondary circuit extending from the gas outlet to the gas inlet so as to recirculate the gas component about the fluid circulation system. For example, heat transfer system 400 may include a secondary circuit 460 that extends from the top of the battery pack 410 where the gas component is collected through the gas outlet 466 to the gas line 462 where the gas component is injected into the liquid component of the cooling medium 402 through the gas inlets 464. The secondary circuit 460 may further include the gas pump 422 to drive the gas component into the primary circuit 440. The use of the secondary circuit 460 can allow the gas component to be recirculated through the battery pack, rather than being exhausted.

In other embodiments, the gas component of the cooling medium may be air that is captured from the surrounding environment. Accordingly, such an embodiment may include an air intake upstream of the gas inlet to the primary circuit and the gas outlet may be exhausted from the system without the need to recycle the air with a secondary circuit. Moreover, in some embodiments, the air intake may be connected to one or more filters to dry the air and remove undesired contaminants. Still in other embodiments, the gas component of the fluid circulation system may be a stored or generated gas that is not recycled, but allowed to escape into the surrounding environment.

The heat transfer system 400 may also include a heat exchanger 424 to absorb energy from the cooling medium 402. For example, the battery pack 410 sits on a heat exchanger 424 in the form of a plate with a coolant running through the heat exchanger. The position of the heat exchanger 424 at the bottom of the battery pack allows the liquid component of the cooling medium 402 that has recirculated through the return path 448 to be cooled before it is driven back through the heat exchange section 442 of the fluid circulation system 420, where it cools the battery cells 412.

In some embodiments, the heat transfer system may include a controller configured to carry out methods of operating the heat transfer system as described below. For example, the heat transfer system 400, shown in FIG. 4, includes a controller 480 that is configured to send control signals to the gas pump 422 in order to operate the gas pump so as to circulate the cooling medium 402 through the fluid circulation system 420.

The controller 480 may include a non-transitory computer-readable medium with program instructions stored thereon for performing the method of the disclosure. In some embodiments, the controller 480 may include at least one memory 482, at least one processor 484, and/or a network interface 486. Additionally or alternatively, in other embodiments, the controller 480 may include a different type of computing device operable to carry out the program instructions. For example, in some embodiments, the controller may include an application specific integrated circuit (ASIC) that performs processor operations, or a field-programmable gate array (FPGA).

While controller 480 of heat transfer system 400 may be physically disposed within the electric vehicle 490, as shown in FIG. 4, in other embodiments, at least some portion of the controller 480 may be physically separated from the rest of the electric vehicle 490. For example, in some embodiments, one or more parts of the controller 480 may be remote from the electric vehicle 490 and communicate with the rest of the electric vehicle via the network interface 486. Further, in some embodiments, the controller 480 may be a client device, i.e., a device actively operated by the user, while in other embodiments, the controller 480 may be a server device, e.g., a device that provides computational services to a client device. Moreover, other types of computational platforms are also possible in embodiments of the disclosure.

The memory 482 may be a computer-usable memory, such as random access memory (RAM), read-only memory (ROM), non-volatile memory such as flash memory, a solid state drive, a hard-disk drive, an optical memory device, and/or a magnetic storage device.

The processor 484 of controller 480 includes computer processing elements, e.g., a central processing unit (CPU), a digital signal processor (DSP), or a network processor. In some embodiments, the processor 484 may include register memory that temporarily stores instructions being executed and corresponding data and/or cache memory that temporarily stores performed instructions. In certain embodiments, the memory 482 stores program instructions that are executable by the processor 484 for carrying out the methods and operations of the disclosure, as described herein.

The network interface 486 provides a communications medium, such as, but not limited to, a digital and/or an analog communication medium, between the controller 480 and other computing systems or devices. In some embodiments, the network interface may operate via a wireless connection, such as IEEE 802.11 or BLUETOOTH, while in other embodiments, the network interface 486 may operate via a physical wired connection, such as an Ethernet connection. Still in other embodiments, the network interface 486 may communicate using another convention.

In some embodiments, the controller 480 may receive sensor values from various sensors, and adapt the control signals sent to the gas pump 422 based on the values from the sensors. For example, the controller 480 may receive temperature values from a temperature sensor 488 and use a feedback loop to send control signals to the pump 422 based on the value received from the temperature sensor 488. Further, the controller 480 may receive values corresponding to the current flowing into or out of the battery pack 410 from an ammeter, and adjust control signals based on the received value from the ammeter.

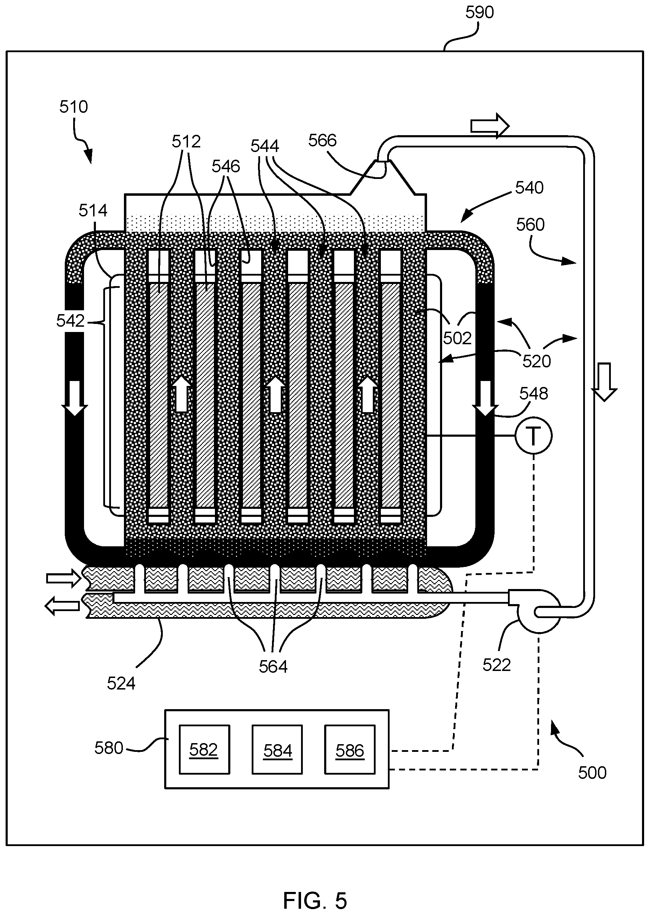

While the embodiment shown in FIG. 4 provides direct contact between the cooling medium 402 and the battery cells 412, the use of a fluid circulation system with a gas inlet and gas outlet may also be utilized in embodiments where the fluid circulation system is isolated from the electrochemical cells. For example, such an embodiment is shown in FIG. 5. Heat transfer system 500, shown in FIG. 5, includes an electrochemical cell unit 510 with a plurality of electrochemical cells 512. The system also includes a fluid circulation system 520 that includes a plurality of conduits 544 defined by discrete conduit walls 546 that extend through the electrochemical cell unit 510. Accordingly, the cooling medium 502 is held in the fluid conduits 544 and is in thermal communication with the electrochemical cells 512 within a heat exchange section 542 of the fluid circulation system 520.

The liquid component of the cooling medium 502 shown in FIG. 5 is contained within a primary circuit 540 of the fluid circulation system 520. On the other hand, the gas component of the cooling medium 502 injected into the primary circuit 540 through a plurality of gas inlets 564 below the electrochemical cells 512. At the top of the electrochemical cell unit 510, the gas is collected in a gas outlet 566 and recirculated through a secondary circuit 560 by a gas pump 522. Likewise, the liquid component of the cooling medium 502 returns to the bottom of the electrochemical cell unit 510 through a return path 548 where it is cooled by a heat exchanger 524 before being driven back through the heat exchange section 542 of the fluid circulation system 520 by the gas bubbles injected through the gas inlets 564.

Similar to FIG. 4, the electrochemical cell unit 510 shown in FIG. 5 may be a battery pack or other type of unit, and the apparatus 590 may be an electric vehicle or another machine or apparatus. Moreover, the heat transfer system 500 may also include a controller 580 having any of the features and configurations described above with respect to the controller shown in FIG. 4, such as a processor 582, a memory 584 and a communication interface 586.

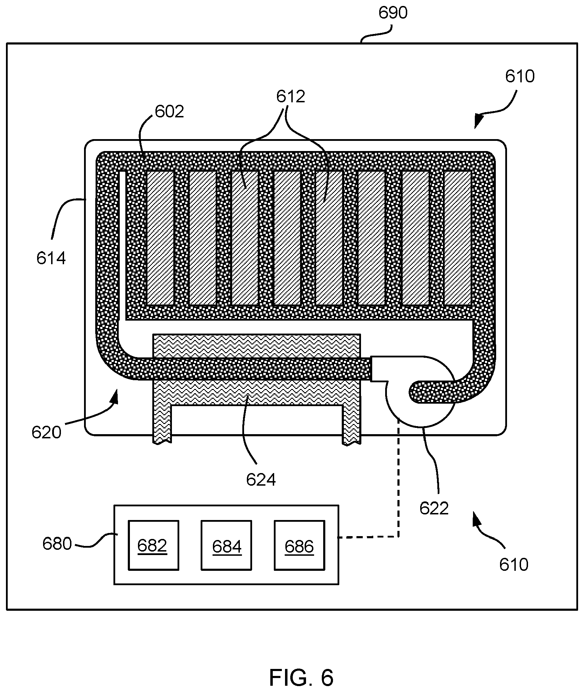

In some embodiments of the heat transfer system, the cooling medium includes the liquid component and the gas component throughout the fluid circulation system. Such a system is shown, for example, in FIG. 6. Heat transfer system 600 includes a fluid circulation system 620 with both the liquid component and gas component of the cooling medium 602 dispersed throughout the system. While the heat transfer system 600 illustrated in FIG. 6 is part of an electric vehicle 690 and includes an electrochemical cell unit in the form of a battery pack 610, similar heat transfer systems may also include other types of electrochemical cell units and may be included in other types of machines or apparatuses as previously described.

The heat transfer system 600 may include a pump 622 configured to propel the cooling medium, including both the liquid component and the gas component, about the fluid circulation system 620. For example, the cooling medium 602 may be in the form of a foam, as described above, that is driven through the paths of the fluid circulation system 620 by pump 622. Moreover, in some embodiments, the pump 622 may help generate the foam by separating the gas component into discrete bubbles within the liquid component.

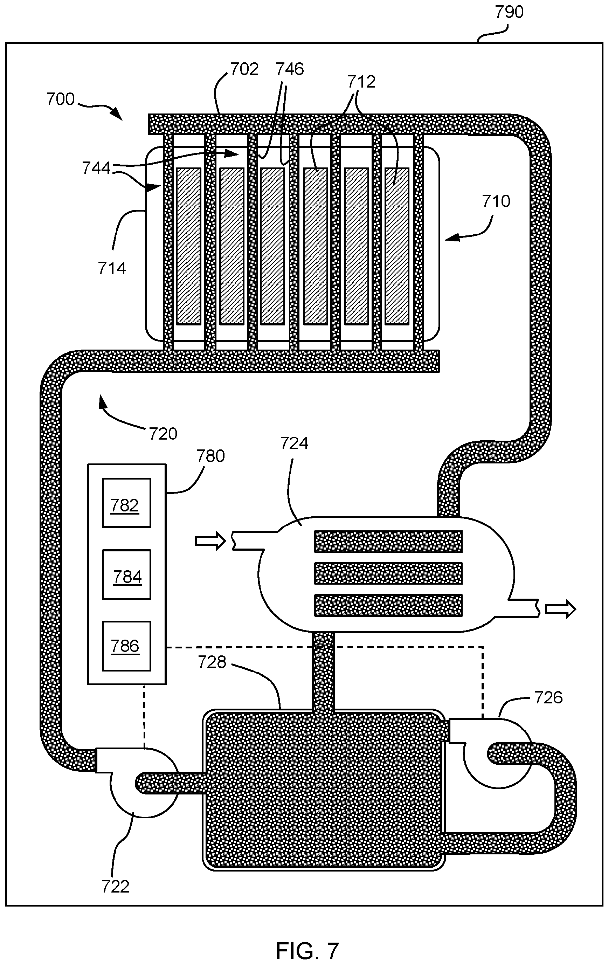

Further, the heat transfer system 600 may also include a heat exchanger 624 that reduces the temperature of the the cooling medium 602 as it circulates through the fluid circulation system 620. The heat exchanger 624 may be positioned downstream of the pump, as shown in FIG. 6, or it may be positioned upstream of the pump (as shown in FIG. 7). Moreover, in some embodiments, the heat exchanger may include several sections that are positioned both upstream and downstream of the pump.

Similar to the electrochemical cell unit shown in FIG. 4, the electrochemical cell unit 610 shown in FIG. 6 may be a battery pack or other type of unit, and the apparatus 690 may be an electric vehicle or another machine or apparatus. Moreover, the heat transfer system 600 may also include a controller 680 having any of the features and configurations described above with respect to the controller shown in FIG. 4, such as a processor 682, a memory 684 and a communication interface 686.

While the embodiment shown in FIG. 6 includes the entire fluid circulation system 620 disposed within the housing 614 of the battery pack 612, in other embodiments, portions of the fluid circulation system may be disposed outside of the housing. For example, in some embodiments, (such as in FIG. 7, described below) one or both of the pump and the heat exchanger may be disposed outside of the housing, so as to be separate from the battery pack. In such an instance, the battery pack may have one or more inlets and outlets for introducing and removing the cooling medium therefrom.

While the embodiment shown in FIG. 6 provides direct contact between the cooling medium 602 and the battery cells 612, the use of a system where the gas and liquid components are distributed throughout the fluid circulation system may also be utilized in embodiments where the fluid circulation system is isolated from the electrochemical cells. For example, such an embodiment is shown in FIG. 7. Heat transfer system 700, shown in FIG. 7, includes an electrochemical cell unit 710 with a plurality of electrochemical cells 712. The system also has a fluid circulation system 720 including a pump 722 that circulates a cooling medium through the electrochemical cell unit 710 and a heat exchanger 724. The fluid circulation system 720 has a plurality of conduits 744 formed by discrete conduit walls 746 extending through the electrochemical cell unit 710 such that the cooling medium 702 held in the fluid conduits 744 is in thermal communication with the electrochemical cells 712 within a heat exchange section 742 of the fluid circulation system 720.

In some embodiments, the heat transfer system 700 may include a mixer configured to promote bubble formation within the cooling medium. For example, in some embodiments, the fluid circulation system 720 may include a reservoir 728 where the cooling medium 702 collects. A mixer 726 may be associated with the reservoir 728 and operate to form discrete bubbles of the gas component in the cooling medium 702. In some embodiments, the mixer 726 may be configured as a pump, as shown in FIG. 7. In other embodiments the mixer 726 may be configured as an agitator including an impeller or a shaking component. Other configurations are also possible. Further, while the embodiment shown in FIG. 7 includes a reservoir 728 in connection with the mixer 726, in other embodiments, the mixer may be positioned in another location, such as within a conduit of the fluid circulation system.

While the heat exchanger 724, pump 722, reservoir 728, and mixer 726 are all shown outside of the housing 714 of the electrochemical cell unit 710, in other embodiments, some or all of these components may be part of the electrochemical cell unit and disposed within the housing.

Similar to the electrochemical cell unit shown in FIG. 4, the electrochemical cell unit 710 shown in FIG. 7 may be a battery pack or other type of unit, and the apparatus 790 may be an electric vehicle or another machine or apparatus. Moreover, the heat transfer system 700 may also include a controller 780 having any of the features and configurations described above with respect to the controller shown in FIG. 4, such as a processor 782, a memory 784 and a communication interface 786.

In another aspect, the disclosure provides an electric vehicle including a heat transfer system that includes a battery pack including a plurality of battery cells. The heat transfer system also includes a fluid circulation system including a heat exchange section in thermal contact with the battery pack. A cooling medium is disposed in the fluid circulation system, and, within the heat exchange section of the fluid circulation system, the cooling medium comprises a mixture including a liquid component and a gas component. A pump is configured to circulate the cooling medium through the fluid circulation system. The heat transfer system may include any of the various features of the heat transfer systems described above.

In another aspect, the disclosure provides a heat transfer system comprising an electrochemical cell unit including an electrochemical cell, and a fluid circulation system. The fluid circulation system includes a primary circuit that extends through the electrochemical cell unit. The fluid circulation system also includes a secondary circuit that extends from a gas outlet from the primary circuit that is downstream of the electrochemical cell to a gas inlet into the primary circuit that is upstream of the electrochemical cell.

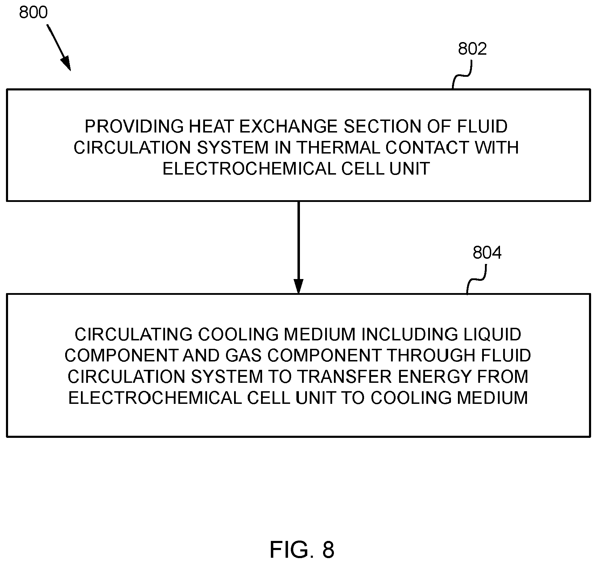

In another aspect, the disclosure provides a method of cooling an electrochemical cell unit. FIG. 8 illustrates an embodiment of such a method 800. In various embodiments, the method 800 may be performed using any of the heat transfer systems, 100, 400, 500, 600, or 700 shown in FIGS. 1, 4, 5, 6, and 7, or alternative configurations thereof. As shown at block 802, the method 800 may involve providing a heat exchange section of a fluid circulation system in thermal contact with an electrochemical cell unit that includes an electrochemical cell. Further, as shown at block 804, the method may also involve circulating a cooling medium through the fluid circulation system so as to transfer energy from the electrochemical cell unit to the cooling medium, wherein, within the heat transfer section of the fluid circulation system, the cooling medium includes a liquid component and a gas component.

In some embodiments of the method 800, circulating the cooling medium at block 804 may maintain, within the heat exchange section of the fluid circulation system, the gas component of the cooling medium in a ratio of at least 50 % by volume. For example, in embodiments utilizing the heat exchange system 400 shown in FIG. 4, the controller 480 may send operating signals to the gas pump 422 in order to inject a sufficient volume of the gas component into the primary circuit 440 of the fluid circulation system 420 to maintain the gas component of the cooling medium 402 in a ratio of at least 50% by volume. Likewise, embodiments utilizing the heat exchange system 500 shown in FIG. 5 may operate similarly. Further, embodiments utilizing the heat exchange system 600, shown in FIG. 6, may including using the controller 680 to send signal to the pump 622 to generate desired foam properties of the cooling medium 602 and move the cooling medium 602 through the electrochemical cell unit 610 in a manner that maintains a majority of the cooling medium as gas within the heat exchange section the fluid circulation system 620. Moreover, in embodiments utilizing the heat exchange system 700, shown in FIG. 7, the controller 780 may send control signals to the mixer 726 or pump 722 to generate desired foam properties of the cooling medium 702 and move the cooling medium 702 through the electrochemical cell unit 710 in a manner that maintains a majority of the cooling medium as gas within the heat exchange section the fluid circulation system 720.

The above detailed description describes various features and functions of the disclosed systems, devices, and methods with reference to the accompanying Figures. In the Figures, similar symbols typically identify similar components, unless context dictates otherwise. The illustrative embodiments described in the detailed description, Figures, and claims are not meant to be limiting. Other embodiments can be utilized, and other changes can be made, without departing from the scope of the subject matter presented herein. It will be readily understood that the aspects of the present disclosure, as generally described herein, and illustrated in the Figures, can be arranged, substituted, combined, separated, and designed in a wide variety of different configurations, all of which are explicitly contemplated herein.

While various aspects and embodiments have been disclosed herein, other aspects and embodiments will be apparent to those skilled in the art. The various aspects and embodiments disclosed herein are for purposes of illustration and are not intended to be limiting, with the true scope of the invention being indicated by the following claims.

## Claims

1. A heat transfer system comprising:
an electrochemical cell unit comprising an electrochemical cell;
a fluid circulation system comprising a heat exchange section in thermal contact with the electrochemical cell unit;
a cooling medium disposed in the fluid circulation system, wherein, within the heat exchange section of the fluid circulation system, the cooling medium comprises a mixture including a liquid component and a gas component; and
a pump configured to circulate the cooling medium through the fluid circulation system.

2. The heat transfer system according to claim 1, wherein, within the heat exchange section of the fluid circulation system, the gas component forms at least 50% by volume of the cooling medium, or
wherein, within the heat exchange section of the fluid circulation system, at least a portion of the liquid component and gas component of the cooling medium form a foam.

3. The heat transfer system according to claim 1 or claim 2, wherein the heat exchange section of the fluid circulation system includes fluid paths that extend through the electrochemical cell unit such that the cooling medium is in direct contact with the electrochemical cell.

4. The heat transfer system according to any of claims 1 to 3, wherein the liquid component of the cooling medium includes at least one of a surfactant and a foam suppressant.

5. The heat transfer system according to any of claims 1 to 4, wherein the fluid circulation system comprises:
a primary circuit including the heat exchange section, wherein the liquid component of the cooling medium is confined to the primary circuit,
a gas inlet in the primary circuit that is upstream of the heat exchange section; and
a gas outlet in the primary circuit that is downstream of the heat exchange section.

6. The heat transfer system according to claim 5, wherein the gas inlet is one of a plurality of gas inlets disposed upstream of the heat exchange section, or
wherein the gas inlet is disposed under the electrochemical cell and the gas outlet is disposed above the electrochemical cell such that buoyancy of the gas component causes the gas component to rise through the electrochemical cell unit, or
wherein the fluid circulation system further comprises a secondary circuit extending from the gas outlet to the gas inlet so as to recirculate the gas component about the fluid circulation system.

7. The heat transfer system according to any of claims 1 to 6, wherein the cooling medium includes the liquid component and the gas component throughout the fluid circulation system.

8. The heat transfer system according to claim 7, wherein the pump is configured to circulate the liquid component and gas component of the cooling medium as a mixture about the fluid circulation system.

9. The heat transfer system according to claim 7, further comprising a mixer configured to promote bubble formation within the cooling medium.

10. A method of cooling an electrochemical cell unit, the method comprising:
providing a heat exchange section of a fluid circulation system in thermal contact with an electrochemical cell unit that includes an electrochemical cell; and
circulating a cooling medium through the fluid circulation system so as to transfer energy from the electrochemical cell unit to the cooling medium, wherein, within the heat transfer section of the fluid circulation system, the cooling medium includes a liquid component and a gas component.

11. The method according to claim 10, wherein circulating the cooling medium maintains, within the heat exchange section of the fluid circulation system, the gas component of the cooling medium in a ratio of at least 50% by volume, or
wherein circulating the cooling medium includes maintaining the cooling medium in the form of a foam throughout the fluid circulation system, optionally wherein circulating the cooling medium includes circulating the foam through a pump.

12. The method according to claim 10 or claim 11, wherein the fluid circulation system comprises a primary circuit including the heat exchange section,
wherein the liquid component of the cooling medium is confined to the primary circuit, and
wherein circulating the cooling medium includes injecting the gas component into the primary circuit.

13. The method according to claim 12, wherein injecting the gas component into the primary circuit drives the liquid component through the fluid circulation system.

14. The method according to claim 13, wherein the gas component is injected into the primary circuit at a location that is beneath the electrochemical cell unit such that buoyancy of the gas component causes the gas component to rise through the electrochemical cell unit.

15. The method according to claim 14, further comprising collecting the gas component through an outlet of the primary circuit.
